# EUROPEAN PATENT APPLICATION

(11) **EP 4 643 724 A1**
(43) Date of publication of application: **05.11.2025**
(21) Application number: 25171790.6
(22) Date of filing: 22.04.2025
(51) Int. Cl.: A47J 31/52

(54) **GENERATING A RECIPE SUGGESTION REPRESENTATIVE OF A SETTING OF AT LEAST ONE PARAMETER OF A BEVERAGE MAKING PROCESS**

(30) Priority: 03.05.2024 EP 24174231
(71) Applicant: Versuni Holding B.V., 1082 MD Amsterdam (NL)
(72) Inventor: LAFFI, Nicola, 1082 MD Amsterdam (NL); WIECK, Thorben, 1082 MD Amsterdam (NL)
(74) Representative: Vollering, Stefanus Franciscus Maria

(57) **Abstract**

In the context of beverage making, a beverage making device (100) is provided, comprising a controller arrangement (10) and a user interface (20). During operation of the beverage making device (100), an algorithm for selecting a user profile associated with the user of the beverage making device (100) is realized. Further, a set of beverage making data is recorded with the selected user profile, which beverage making data does not only include parameter settings of the beverage making process that are representative of the chosen recipe, but also time data representative of a time at which the beverage making process is performed. The recordal of the time data enables providing the user with a recipe suggestion which is chosen in relation to the time at which the recipe suggestion is generated.

## Description

### FIELD OF THE INVENTION

The invention relates to a beverage making device, in particular a coffee maker, for instance a full automatic espresso machine.

### BACKGROUND OF THE INVENTION

A well-known example of a beverage making device is a coffee maker, The invention and the background of the invention are described for such a type of beverage making device. However, the invention is not limited thereto. Much rather, the invention is applicable to other types of beverage making devices as well.

In the field of coffee makers, it is known to have a coffee maker which is equipped with a user interface so as to enable a user of the coffee maker to operate the coffee maker. For example, the user interface may comprise a display that presents a number of different drink recipes from which the user can select a desired option, such as an espresso, a regular coffee, a cappuccino, an Americano, a ristretto or a café au lait. To obtain a coffee drink, a user may select the desired drink recipe on the display and then initiate the coffee making process via an appropriate start signal.

Further, it is known to have a coffee maker which is configured to electronically store information about users in so-called user profiles. Having user profiles linked to respective users of the coffee maker offers an opportunity to communicate specific and personalized data to each user.

It is an object of the invention to provide a beverage making device which is configured to make use of user profiles, and which is configured to offer respective users of the device a high level of customization and ease of operating the device.

### SUMMARY OF THE INVENTION

The invention provides a beverage making device configured to perform a beverage making process to thereby output a beverage. The beverage making device comprises a controller arrangement configured to control operation of the beverage making device, a user interface configured to enable communication between the controller arrangement and a user of the beverage making device, and a memory configured to store respective user profiles that are associated with respective users of the beverage making device. The controller arrangement may be arranged in a housing of the beverage making device or at least partly be arranged outside the beverage making device, e.g. in the cloud. Similar considerations apply to the memory. The user interface may be arranged on a housing of the beverage making device or on a separate device, e.g. a mobile phone or tablet.

The controller arrangement is configured to enable the user to choose a recipe via the user interface.

The controller arrangement is configured to realize various control algorithms. The various control algorithms include a user identifying algorithm involving an action of selecting a user profile that is linked to the user of the beverage making device. The action of selecting a user profile may be based on input provided by the user, e.g. via the user interface. The user may for instance select his previously created user profile on a display of the user interface. Alternatively, the controller arrangement may be configured to compare user identity data received from the user to earlier recorded user identity data and based on said comparison identify the relevant user profile.

The various control algorithms further include a data recording algorithm involving an action of recording a set of beverage making data with the selected user profile each time the beverage making device is operated to perform a beverage making process. The data recording algorithm is designed to include, in the set of beverage making data, parameter settings of the beverage making process that are representative of the chosen recipe. Parameters of the beverage making process may for instance include volume of the recipe, strength of the recipe, brew parameters like brew pressure, brew time, brew temperature, ratios of coffee material, water and/or milk material, etc. The settings (values) of these parameters may differ per recipe. The parameter settings may be preprogrammed per recipe. Optionally, at least part of the parameter settings may be adjustable by the user.

The various control algorithms further include a suggestion generating algorithm involving an action of generating a recipe suggestion, by selecting sets of beverage making data of a selected user profile and performing an analyzing process on said selected sets of beverage making data. The suggestion generating algorithm further involves an action of communicating the recipe suggestion to the user through the user interface.

The beverage making device comprises a clock arrangement configured to provide actual time information. The data recording algorithm is designed to also include time data representative of a time at which the beverage making process is performed in the set of beverage making data. The suggestion generating algorithm is designed to apply an actual time at which the recipe suggestion is generated as a criterion in selecting the sets of beverage making data of the selected user profile.

Thus, the beverage making device according to the invention is operable to provide a user of the beverage making device with a recipe suggestion that takes into account an actual time at which the recipe suggestion is generated. In particular, the beverage making device is configured such that after a user profile has been identified and the beverage making device is operated to perform a beverage making process, a set of beverage making data is recorded with said user profile. This set of beverage making data does not only include parameter settings of the beverage making process that are representative of the selected recipe, but also includes time data representative of a time at which the beverage making process is performed. The availability of time data enables categorization of the sets of beverage making data in different time slots. As a result, it is possible to only use sets of beverage making data which are relevant to a certain time slot in a process of generating a recipe suggestion for the user which is specific for that time slot. This implies that if the user has the habit of choosing different recipes during different time slots, e.g. during different periods of the day or during different days of the week, the beverage making device is capable of providing the user with different recipe suggestions during different time slots, in accordance with the user's beverage habits. The recipe suggestions reflect a detected preference of the user in the different time slots.

The term recipe in this description refers to different beverage types that can be prepared via the beverage making process of the beverage making device. **In** the case of a coffee maker, the recipes may for instance include black coffee recipes such as an espresso, ristretto, Lungo, regular coffee, Americano; or milk based coffee recipes such as a cappuccino, a café au lait, etc. The parameter(s) of the beverage making process may vary per recipe over a range of possible values. Examples of such parameters of the beverage making process may for instance include the total volume of the recipe, the strength/intensity, the amount of coffee material (e.g. ground coffee) that is to be used, the grind size and/or grind time of the ground coffee (in case the coffee maker includes a grinder), the tamping force with which the coffee grounds are compacted, the amount of water that is to be used, the flow rate/ flow pattern of the water supply to the brew unit, the pressure or pressure profile in the brew unit during brewing, the brew time, the brew temperature, the inclusion or not of a pre-wetting phase, the amount of milk that is added to the coffee beverage, the coffee to milk ratio, the order in which coffee and milk are dispensed, whether the milk is frothed or not, and if frothed, the milk to foam ratio, etc. The recipes and related parameter settings of the beverage making process may be pre-programmed in the beverage making device. A user then merely needs to select a recipe from a menu that may be presented via the user interface. The related parameter settings of the beverage making process will then be automatically set by the controller arrangement. In some embodiments, especially more sophisticated coffee makers, the recipes and related parameter settings (or at least some of the parameter settings) may be customized by a user via the user interface. The user may for instance adjust the recipe volume, the strength, the coffee-milk ratio, etc. in accordance with his taste. Advantageously, these customized recipes/ parameter settings may be saved so that the user does not have to adjust the parameter settings again. If the machine is used by several users, advantageously the customized parameter settings may be stored under a customized recipe name, e.g. "John's espresso", "Jane's early morning cappuccino", etc. Thus, the term recipe in the present description refers both to default, pre-programed recipes and customized recipes of which at least some parameter settings have been customized by a user. The suggestion generating algorithm according to the invention takes both recipe types (standard preprogrammed and customized) into account.

The user profiles may be created and stored in the beverage making device by the respective users. Alternatively, the user profiles may be created by the beverage making device, by means of appropriate user identification techniques such as a log in code that may be entered by a user, or by reading an identification code or chip that is arranged in an item (card, drink cup, etc.) carried by the user, or via biometric recognition means, such as a finger print reader, voice recognition, or via mobile phone identification, etc.

In an embodiment, the suggestion generating algorithm is designed to select those sets of beverage making data of the selected user profile of which the time data are representative of a time which falls in the same time slot (e.g. the same period of the day or same day of the week) as the actual time at which the recipe suggestion is determined. Thus, when a user profile is selected at a given time, the suggestion generating algorithm only takes into account data reflecting previous choices made by the user (as recorded in his user profile) which are from the same time slot (e.g. the same period of the day or the same day of the week).

The suggestion generating algorithm may be designed to determine the time slot by comparing the actual time at which the recipe suggestion is determined to a time scheme stored in the memory of the beverage making device. The time scheme may include at least two time slots, preferably at least three time slots, more preferably at least four time slots.

A time slot any include a part of a day, for instance a morning period, an afternoon period, an evening period, a night period. The morning period may for instance be defined as a period from 5:00h to 12:00h, the afternoon period may be defined as a period from 12:00h to 18:00h, the evening period may be defined as a period from 18:00h to 21:00h, and the night period may be defined as a period from 21:00h to 5:00h.

Alternatively, a time slot may include a part of a week, for instance a day, a specific day (Monday, Tuesday, etc.), a weekday, a weekend; or a part of a year, for instance a month or a season (winter, summer, spring, autumn).

In an embodiment, the data recording algorithm involves an action of recording dismission data in the event that a recipe suggestion is dismissed by the user. The suggestion generating algorithm may be designed to avoid performing the action of generating a recipe suggestion and the action of communicating the recipe suggestion to the user through the user interface for the respective time slot. In this way, a situation in which the user is bothered with a recipe suggestion that he has dismissed just a short while ago cannot occur. In this respect, it may be practical if the suggestion generating algorithm is designed to assess for each time slot whether a minimum amount of time has passed since any recordal of dismission data for the respective time slot. A suitable value of the minimum amount of time may for instance be 12 hours.

In order to achieve high effectiveness of the recipe suggestions and avoid annoyance of the user, it is advantageous if one or more thresholds are applied to the generation of recipe suggestions. This can be realized in various ways. For instance, the suggestion generating algorithm may be designed to effect an assessment action when performing the analyzing process on the selected sets of beverage making data. This assessment action is representative of assessing, for each one of the possible parameter settings representative of a given recipe, whether a number of times that said parameter settings has been chosen in a certain reference period of time is equal to or higher than a minimum number, and to generate a recipe suggestion representative of said parameter settings only when an outcome of the assessment action is positive. In a feasible example, the minimum number may for instance be 5. The reference period of time may for instance be 7 days. As a result, recipe suggestions are only generated once a sufficient amount of data is available and it can be established with a certain level of confidence that a user indeed has a preference for said recipe at a given time slot.

In order to avoid premature generation of recipe suggestions, i.e. generation of recipe suggestions on the basis of an insufficient amount of data, it is advantageous if the suggestion generating algorithm involves an action of comparing a total number of sets of beverage making data recorded with the coffee making device and/or with a selected user profile to a minimum number. The suggestion generating algorithm is designed to perform the action of generating a recipe suggestion and the action of communicating the recipe suggestion to the user through the user interface only if the total number of sets of beverage making data is equal to or higher than the minimum number. A suitable value of the minimum number may for instance be 50 when considering the total number of sets of beverage making data recorded with the device as a whole, and can be lower, for instance 10 when considering the total number of sets of beverage making data recorded with a specific user profile.

It is further practical if the suggestion generating algorithm is designed to select one recipe suggestion in case more than one recipe suggestion is generated and discard the one or more other recipe suggestions. In this way, it is ensured that the user is offered no more than one suggestion.

The invention is not restricted to a certain type of user interface. It is possible that the user interface comprises a display. In such a case, it may be practical if the suggestion generating algorithm is designed to perform the action of communicating the recipe suggestion to the user through the user interface by generating a pop-up on the display. The suggestion generating algorithm may be designed to remove the pop-up from the display upon receipt of certain user input. For instance, the display may be a touch screen. In such case, when the screen is touched in an area outside of the pop-up, the pop-up may be removed by the suggestion generating algorithm, possibly with some fading-out time.

As suggested earlier, the invention covers various types of beverage making device, wherein a coffee maker is a practical example. The coffee maker is configured to make a coffee drink on the basis of a supply of coffee material (which may be freshly ground or prepackaged in a pod or capsule), water and, optionally, milk material. The term "coffee material" is to be understood so as to cover any form of coffee ingredient, such as coffee beans and coffee powder, and likewise, the term "milk material" is to be understood so as to cover any form of milk ingredient, such as liquid milk and milk powder. The coffee maker may comprise at least a brew unit for brewing coffee. Optionally, the coffee maker may comprise a grinder for grinding coffee beans. Optionally, the coffee maker may comprise a milk froth unit for heating and/or frothing milk.

The above-described and other aspects of the invention will be apparent from and elucidated with reference to the following detailed description of a practical embodiment of a coffee maker which is capable of providing a user with a recipe suggestion, wherein information about the actual time is taken into account in the process of generating the recipe suggestion.

### BRIEF DESCRIPTION OF THE DRAWINGS

The invention will now be explained in greater detail with reference to the figures, in which equal or similar parts are indicated by the same reference signs, and in which:
Figure 1 schematically shows a front view of a coffee maker according to an embodiment of the invention; and
Figure 2 schematically shows a front view of a user interface of the coffee maker.

### DETAILED DESCRIPTION OF EMBODIMENTS

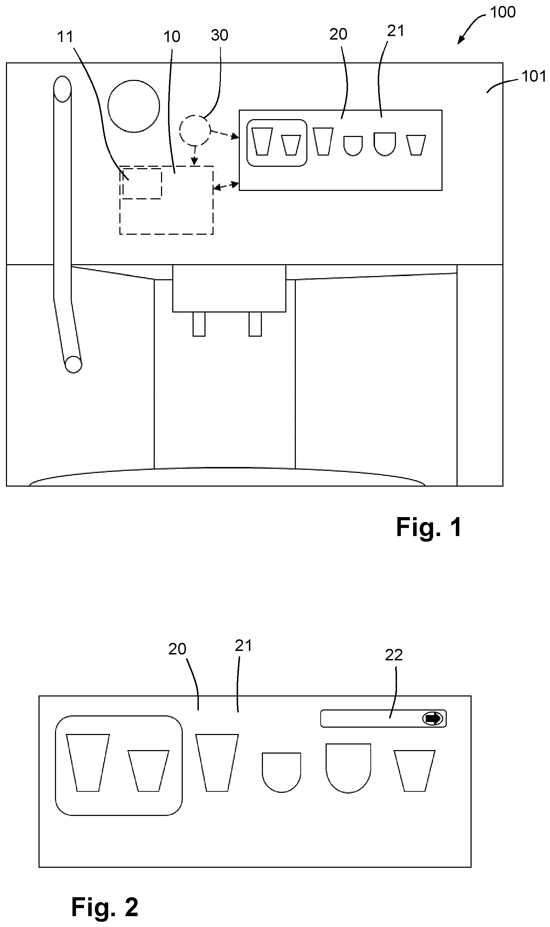

The invention is in the field of making beverages by means of an electronic device. Figure 1 schematically shows a front view of a coffee maker 100 according to an embodiment of the invention.

The coffee maker 100 comprises a controller arrangement 10 and a user interface 20, wherein the controller arrangement 10 serves to control operation of the coffee maker 100, and the user interface 20 is functional to enable communication between the controller arrangement 10 and a user of the coffee maker 100. In the present example, the user interface 20 is arranged on a housing 101 of the coffee maker 100. In an alternative embodiment, at least part of the user interface 20 may be arranged outside the housing 101, e.g. on a separate device such as a mobile phone or tablet. The user interface 20 comprises a display 21. In the present example, the display 21 includes a touch screen to enable user input. In alternative embodiments, separate input means may be provided, e.g. in the form of buttons, sliders, scroll wheels or the like. The controller arrangement 10 may comprise a microcontroller, for example. The controller arrangement 10 is only schematically indicated by means of dashed lining in figure 1. Exchange of data between the controller arrangement 10 and the user interface 20 is indicated by means of a dashed double-headed arrow in figure 1. At least part of the controller arrangement 10 may be arranged outside the housing 101, e.g. in the cloud.

The coffee maker 100 is designed to offer a range of coffee recipes, e.g. espresso, ristretto, cappuccino. Each recipe may come with its own preprogrammed parameter settings. Advantageously, these settings may be adjusted by a user to create customized recipes.

Identification of a user can take place in any suitable way. Use may be made of user profiles. These user profiles may be created by the respective users or by the coffee maker. The user profiles are stored in a memory 11 of the coffee maker. The memory 11 is only schematically indicated by means of dashed lining in figure 1. The memory 11 may be arranged inside the housing 101 or be at least partially arranged outside the housing 101, e.g. in the cloud.

After a user profile has been identified and a coffee making process has been initiated, relevant details of the coffee making process are recorded with the respective user profile. These recorded details constitute a source of information which can be used to determine the user's preferences and to provide the user with recipe suggestions in line with his habits. For example, it is possible to use the recorded details to determine which recipes are preferred by the user and to adapt a presentation of recipes on the display 21 of the user interface 20 accordingly.

The controller arrangement 10 is configured to perform a suggestion generating algorithm aimed at providing the user with a recipe suggestion. The suggestion generating algorithm is particularly designed to take into account time-related information in the process of generating the recipe suggestion, as will become apparent from the following example of rules to be applied in this process.

An initial, general Rule 1 reads as follows: "More than x drinks brewed from y", in which x is a minimum number of drinks, such as 10 or 25 or 50, and in which y is an identified user profile. This rule ensures that recipe suggestions will only start after a minimum amount of recipes has been ordered, so that sufficient data are available for generating meaningful suggestion. Alternatively or additionally, the rule may take the number of recipes into account that has been ordered with the device (thus the total sum of all recipes that have been ordered with the beverage making device by all users of the device).

Further, sets of rules are applied in dependence on the time at which the suggestion generating algorithm is triggered. The coffee machine 100 is equipped with a clock arrangement 30 for providing the time information as necessary. The clock arrangement 30 is schematically indicated by means of dashed lining in figure 1. Output of data from the clock arrangement 30 to the controller arrangement 10 and the user interface 20, respectively, is indicated by means of dashed arrows in figure 1. An example of a set of rules is provided in the table below.

| **1. Morning** | | |
|---|---|---|
| | Description | Value |
| Rule 2 | Make w, x times in the last y days | w = a drink, x = 5, y = 7 |
| Rule 3 | w is made between those hours x | x = (5-12) |
| Rule 10 | x since last recipe suggestion was dismissed by the user interface for this timeslot | x = 12h |

| **2. Afternoon** | | |
|---|---|---|
| | Description | Value |
| Rule 4 | Make w, x times in the last y days | w = a drink, x = 5, y = 7 |
| Rule 5 | w is made between those hours x | x = (12-18) |
| Rule 10 | x since last recipe suggestion was dismissed by the user interface for this timeslot | x = 12h |

| **3. Evening** | | |
|---|---|---|
| | Description | Value |
| Rule 6 | Make w, x times in the last y days | w = a drink, x = 5, y = 7 |
| Rule 7 | w is made between those hours x | x = (18-21) |
| Rule 10 | x since last recipe suggestion was dismissed by the user interface for this timeslot | x = 12h |

| **4. Night** | | |
|---|---|---|
| | Description | Value |
| Rule 8 | Make w, x times in the last y days | w = a drink, x = 5, y = 7 |
| Rule 9 | w is made between those hours x | x = (21-5) |
| Rule 10 | x since last recipe suggestion was dismissed by the user interface for this timeslot | x = 12h |

Rule 1, Rule 2 and Rule 3 are in AND. Likewise, for Rule 1, Rule 4, Rule 5; Rule 1, Rule 6, Rule 7; and Rule 1, Rule 8, Rule 9. Depending on the output of the clock arrangement 30, the appropriate set of rules is chosen. Rule 10 ensures that if a user rejects a suggestion, said suggestion will not be displayed again, or at least not during a certain period of time, e.g. a number of days or weeks.

A further rule may be applied to avoid that more than one recipe suggestion is output and communicated to the user: Rule 11 "Lowest RecipeID will be recommended". Provided that the result of Rule 1 is positive and further rules can be applied, the suggestion generating algorithm yields an outcome which is representative of the user's most preferred drink in a given time slot, in the present example: a period of the day. The recipe suggestion may be displayed on the user interface, optionally together with the user's name and/or details of the time slot that has been taken into account for the recipe suggestion. For example: "good afternoon John, shall I brew your usual ristretto"?

The values in the last column of above table are of course exemplary. They may be varied as appropriate, for instance depending on the frequency that the coffee maker is used by all users or by a specific user, depending on the number of different recipes that is offered by the coffee maker, depending on the desired level of accuracy/confidence that the recipe suggestion is correct, etc.

The time slots provided in above table may be varied. For instance, the begin and/or start time of a time slot (here: morning, afternoon, evening, night) may be varied. The time scheme (here: one day) may include more than four time slots. The day may for instance be divided in 6, 8 or 12 time slots. The time slots may be of equal length or of differing lengths. The time scheme may include less than four time slots; One time slot may for instance cover an entire day or several days. In the latter case, suggestions may be generated depending on for instance the day of the week. For example, a user's recipe routines may differ depending on whether it is a weekday or a weekend and the suggestions may be updated accordingly. It is also possible to look at even longer time slots, which may for instance allow to take seasonal effects into account (summer, winter, autumn, spring).

Figure 2 illustrates a practical option of communicating the recipe suggestion to the user through the user interface 20. The user interface 20 may be arranged on a housing of the coffee maker. Alternatively, the user interface can be presented in a separate device, for instance a mobile phone or tablet. The recipe suggestion may for instance be presented as a pop-up on the display 21 of the user interface 20. The pop-up may for instance be a mini pop-up 22, as illustrated. The pop-up 22 may appear in a recipe list which may be a default recipe list or a customized recipe list (customized in relation to the respective user profile). The pop-up 22 may show a short text such as "The usual <name of recipe>?". The text may further include the name of the user and/or details on the time slot for which the suggestion applies. The pop-up 22 may have a scrolling feature to show more text. The pop-up 22 may disappear automatically after a predetermined amount of time, e.g. 2 seconds. Alternatively or additionally, the pop-up may disappear in response to certain user input. For instance, when the display 21 includes a touch screen, a touch or swipe on the screen may cause the pop-up 22 to be considered seen and thus deleted. A fading-out time may be applied, such as 0.5 seconds. The pop-up 22 may also disappear after a change of the display 21 driven by the controller arrangement 10 (alarms or stand-by).

It is advantageous if the user's name or another identification mark of the user is continuously visible on the display 21, so that the user may experience a feeling of being identified. The user interface may further include means to confirm the suggestion or reject the suggestion. In the case that the display includes a touch screen, the user may for instance touch the pop-up 22 to confirm the suggestion and initiate the actual process of preparing the chosen recipe. The display 21 may then be driven to show new information indicating this to the user, optionally followed by information indicating progress of the beverage making process. To reject the suggestion, the user may touch the screen in an area outside the pop-up, as mentioned above.

It will be clear to a person skilled in the art that the scope of the invention is not limited to the examples discussed in the foregoing, but that several amendments and modifications thereof are possible without deviating from the scope of the invention as defined in the attached claims. It is intended that the invention be construed as including all such amendments and modifications insofar they come within the scope of the claims or the equivalents thereof. While the invention has been illustrated and described in detail in the figures and the description, such illustration and description are to be considered illustrative or exemplary only, and not restrictive. The invention is not limited to the disclosed embodiments. The drawings are schematic, wherein details that are not required for understanding the invention may have been omitted, and not necessarily to scale.

Variations to the disclosed embodiments can be understood and effected by a person skilled in the art in practicing the claimed invention, from a study of the figures, the description and the attached claims.

Elements and aspects discussed for or in relation with a particular embodiment may be suitably combined with elements and aspects of other embodiments, unless explicitly stated otherwise. Thus, the mere fact that certain measures are recited in mutually different dependent claims does not indicate that a combination of these measures cannot be used to advantage.

Notable aspects of the invention are summarized as follows. **In** the context of beverage making, a beverage making device 100 is provided, comprising a controller arrangement 10 and a user interface 20. During operation of the beverage making device 100, an algorithm for selecting a user profile associated with a user of the beverage making device 100 is realized. Further, a set of beverage making data is recorded with the selected user profile, which beverage making data does not only include parameter settings of the beverage making process that are representative of the chosen recipe, but also time data representative of a time at which the beverage making process is performed. The recordal of the time data enables providing the user with a recipe suggestion which is chosen in relation to the time slot at which the recipe suggestion is generated.

## Claims

1. A beverage making device (100), in particular a coffee maker, configured to perform a beverage making process to thereby output a beverage, wherein the beverage making device (100) comprises:
- a controller arrangement (10) configured to control operation of the beverage making device (100),
- a user interface (20) configured to enable communication between the controller arrangement (10) and a user of the beverage making device (100), and
- a memory (11) configured to store respective user profiles associated to respective users of the beverage making device (100),
wherein the controller arrangement (10) is configured to enable the user to choose a recipe via the user interface (20), and to realize various control algorithms during operation of the beverage making device (100), including:
- a user identifying algorithm involving an action of selecting a user profile associated to the user of the beverage making device (100),
- a data recording algorithm involving an action of recording a set of beverage making data with a selected user profile each time the beverage making device (100) is operated to perform the beverage making process, and designed to include, in the set of beverage making data, parameter settings of the beverage making process that are representative of the chosen recipe, and
- a suggestion generating algorithm involving an action of generating a recipe suggestion by selecting sets of beverage making data of a selected user profile and performing an analyzing process on the selected sets of beverage making data, and an action of communicating the recipe suggestion to the user through the user interface (20),
- the beverage making device (100) comprises a clock arrangement configured to provide actual time information,
- the data recording algorithm is designed to also include time data in the set of beverage making data, which time data are representative of a time at which the beverage making process is performed, and
- the suggestion generating algorithm is designed to apply an actual time at which the recipe suggestion is generated as a criterion in selecting the sets of beverage making data of the selected user profile.

2. The beverage making device (100) as claimed in claim 1, wherein the suggestion generating algorithm is designed to select the sets of beverage making data of the selected user profile of which the time data are representative of a time which falls in a same time slot as the actual time at which the recipe suggestion is determined.

3. The beverage making device (100) as claimed in claim 2, wherein the suggestion generating algorithm is designed to determine the time slot by comparing the actual time at which the recipe suggestion is determined to a time scheme stored in the memory (11) of the beverage making device.

4. The beverage making device (100) as claimed in claim 3, wherein the time scheme includes at least two time slots, preferably at least three time slots, more preferably at least four time slots.

5. The beverage making device (100) as claimed in any of claims 2 to 4, wherein a time slot includes a part of a day (for instance a morning period, an afternoon period, an evening period, a night period); a part of a week (for instance a Monday, a Tuesday, one or more weekdays, a weekend); and/or a part of a year (for instance a January, a February, a winter, a summer, a spring, an autumn).

6. The beverage making device (100) as claimed in any of claims 2-5, wherein the data recording algorithm involves an action of recording dismission data, in the event that a recipe suggestion communicated to the user through the user interface (20) is dismissed by the user.

7. The beverage making device (100) as claimed in claim 6, wherein the suggestion generating algorithm is designed to take the recorded dismission data into account and avoid, preferably during a certain period of time, performing the action of generating a recipe suggestion and the action of communicating the recipe suggestion to the user through the user interface (20) for the respective time slot.

8. The beverage making device (100) as claimed in any of claims 1-7, wherein the suggestion generating algorithm is designed to effect an assessment action when performing the analyzing process on the selected sets of beverage making data, which assessment action is representative of assessing, for each of the parameter settings of the beverage making process that are representative of a chosen recipe, whether a number of times that said parameter settings has been chosen in a certain reference period of time is equal to or higher than a minimum number, and to generate a recipe suggestion representative of said parameter settings only in the case of a positive outcome of the assessment action.

9. The beverage making device (100) as claimed in any of claims 1-8, wherein the suggestion generating algorithm is designed to select one recipe suggestion in case more than one recipe suggestion is generated and discard the one or more other recipe suggestions.

10. The beverage making device (100) as claimed in any of claims 1-9, wherein:
- the suggestion generating algorithm involves an action of comparing a total number of sets of beverage making data recorded in the memory (11) of the device (100) to a minimum number, and
- the suggestion generating algorithm is designed to perform the action of generating a recipe suggestion and the action of communicating the recipe suggestion to the user through the user interface (20) only if the total number sets of beverage making data is equal to or higher than the minimum number.

11. The beverage making device (100) as claimed in any of claims 1-10, wherein:
- the suggestion generating algorithm involves an action of comparing a total number of sets of beverage making data recorded with a selected user profile to a minimum number, and
- the suggestion generating algorithm is designed to perform the action of generating a recipe suggestion and the action of communicating the recipe suggestion to the user through the user interface (20) only if the total number of sets of beverage making data is equal to or higher than the minimum number.

12. The beverage making device (100) as claimed in any of claims 1-11, wherein:
- the user interface (20) comprises a display (21), and
- the suggestion generating algorithm is designed to perform the action of communicating the recipe suggestion to the user through the user interface (20) by generating a pop-up (22) on the display (21).

13. The beverage making device (100) as claimed in claim 12, wherein the display (21) is a touch screen.

14. The beverage making device (100) as claimed in claim 13, wherein the suggestion generating algorithm is designed to remove the pop-up (22) from the display (21) when the touch screen is touched in an area outside of the pop-up (22).

15. The beverage making device (100) as claimed in any one of claims 1-14, including a brew unit for making a recipe on the basis of a supply of coffee material, water and, optionally, milk material, optionally including a grinder for grinding coffee beans and/or a milk frother for heating and/or frothing milk material.
